# EUROPEAN PATENT APPLICATION

(11) **EP 4 742 420 A1**
(43) Date of publication of application: **13.05.2026**
(21) Application number: 24877455.6
(22) Date of filing: 02.10.2024
(51) Int. Cl.: H01M 50/471, H01M 50/105, H01M 50/183, H01M 50/211

(54) **SECONDARY BATTERY AND BATTERY PACK COMPRISING SAME**

(30) Priority: 12.10.2023 KR 20230136015; 20.08.2024 KR 20240111275
(71) Applicant: LG Energy Solution, Ltd., Seoul 07335 (KR)
(72) Inventor: SHIN, Dong Il, Daejeon 34122 (KR)
(74) Representative: Goddar, Heinz J.
(86) International application number: PCT/KR2024/014956
(87) International publication number: WO 2025/079917

(57) **Abstract**

The present disclosure relates to a secondary battery. An aspect of the present disclosure may provide a secondary battery including: a pouch-type case including a first pouch and a second pouch connected to each other, the pouch-type case being folded along a folding line such that an accommodation space surrounded by the first pouch and the second pouch is formed; an electrode assembly accommodated in the accommodation space; and a film- or sheet-shaped spacer that is spaced apart from the electrode assembly in the direction of the folding line and interposed between the first pouch and the second pouch.

## Description

### TECHNICAL FIELD

### CROSS-REFERENCE TO RELATED APPLICATIONS

This application is based on and claims priority from Korean Patent Application No. 10-2023-0136015, filed on October 12, 2023 and No. 10-2024-0111275, filed on August 20, 2024, with the Korean Intellectual Property Office, the disclosure of which is incorporated herein in its entirety by reference.

### TECHNICAL FIELD

The present disclosure relates to a secondary battery in which an electrode is accommodated in a pouch-type case, and a battery pack including the same.

### BACKGROUND ART

With the rapid distribution of electronic devices that use batteries, such as mobile phones, laptop computers, and electric vehicles, the demand for small, lightweight, yet relatively high-capacity secondary batteries has been rapidly increasing. In particular, lithium secondary batteries, which are lightweight and have high energy density, are gaining attention as power sources for the portable devices.

Secondary batteries are classified into prismatic, cylindrical, and pouch types, depending on the shape of the case or cladding that accommodates the electrode assembly. Each secondary batter type has distinct characteristics. For example, the prismatic battery, which has a flat and angular box-like shape, is surrounded by an aluminum can, making it resistant to external impacts, highly durable, and relatively safe. The cylindrical battery, which has a metal cylinder shape similar to a commonly used dry cell, has a robust metal exterior. In addition, the pouch-type battery has a shape similar to a pouch, and is in the form of a battery contained in a film pouch.

### SUMMARY

### TECHNICAL PROBLEM

The present disclosure provides a secondary battery with high energy density and a battery pack including the same.

Any details not explicitly mentioned in the present disclosure will be clearly understood by those skilled in the art from the following description.

### TECHNICAL SOLUTION

An aspect of the present disclosure provides a secondary battery including: a pouch-type case including a first pouch and a second pouch connected to each other, the pouch-type case being folded along a folding line such that an accommodation space surrounded by the first pouch and the second pouch is formed; an electrode assembly accommodated in the accommodation space; and a film- or sheet-shaped spacer that is spaced apart from the electrode assembly in the direction of the folding line and interposed between the first pouch and the second pouch.

At this time, the pouch-type case may include a bridge provided along the folding line to connect the first pouch and the second pouch.

At this time, one edge of the spacer may extend in parallel to the bridge.

At this time, one edge of the spacer may be in contact with the bridge.

At this time, the bridge may extend long in the direction of the folding line and may have a predetermined width in the thickness direction of the spacer.

At this time, the first pouch and the second pouch may each include an accommodation portion having a recessed shape, and a terrace portion provided at a peripheral edge of the accommodation portion. The spacer may be interposed between the terrace portion of the first pouch and the terrace portion of the second pouch.

At this time, the first pouch may include an accommodation portion having a recessed shape and a terrace portion provided at a peripheral edge of the accommodation portion, the second pouch may be formed flat, and the spacer may be interposed between the terrace portion of the first pouch and the terrace portion of the second pouch.

At this time, the bridge may include: an accommodation portion-side connecting portion extending in the direction of the folding line to connect the accommodation portion of the first pouch and the accommodation portion of the second pouch; and a terrace portion-side connecting portion extending from the accommodation portion-side connecting portion to connect the terrace portion of the first pouch and the terrace portion of the second pouch.

At this time, the accommodation portion-side connecting portion may have a predetermined width in the thickness direction of the spacer, and the thickness of the spacer may be greater than or equal to the width of the accommodation portion-side connecting portion.

At this time, the terrace portion-side connecting portion may have a width greater than or equal to that of the accommodation portion-side connecting portion.

At this time, the terrace portion-side connecting portion may include an outer surface parallel to the thickness direction of the spacer.

At this time, the terrace portion-side connecting portion and the accommodation portion-side connecting portion may be connected to each other and extend to be at least partially positioned on the same line.

At this time, a portion where the terrace portion-side connecting portion and the terrace portion of the first pouch are connected and a portion where the terrace portion-side connecting portion and the terrace portion of the second pouch are connected may be bent such that the terrace portion of the first pouch and the terrace portion of the second pouch face each other.

At this time, the terrace portion-side connecting portion may spread out or flatten in the thickness direction of the spacer such that one portion adjacent to the terrace portion of the first pouch and another portion adjacent to the terrace portion of the second pouch are not in contact with each other.

At this time, the spacer may include a first layer and a second layer stacked on each other, and the first layer and the second layer may have different rigidities.

At this time, the spacer may include a first spacer and a second spacer which are respectively spaced apart on opposite sides of the electrode assembly in the direction of the folding line.

At this time, the spacer may extend along the periphery of the accommodation space.

At this time, the spacer may include a first layer; and a second layer and a third layer, respectively, provided on opposite surfaces of the first layer.

At this time, the second and third layers may include a resin material that becomes adhesive when heated, allowing the second and third layers to be bonded to the first and second pouches, respectively, by heat or pressure.

Another aspect of the present disclosure provides a battery pack including the aforementioned secondary battery, and a packaging configured to accommodate the secondary battery.

### ADVANTAGEOUS EFFECTS

According to an aspect of the present disclosure, a film- or sheet-shaped spacer is interposed between the upper pouch and the lower pouch, allowing the shape of the folded portion of the pouch-type case to be adjusted. As a result, the folded portion of the pouch-type case may be formed in a uniform shape along the folding line, minimizing an occurrence of a so-called "bat ear". Through this, the secondary battery according to an aspect of the present disclosure may have a high energy density.

According to an aspect of the present disclosure, the spacer interposed between the first pouch and the second pouch is configured to apply a predetermined force in the thickness direction to spread or flatten the bridge, allowing the folded portion of the pouch-type case to be formed in a more uniform shape along the folding line, thereby further reducing the occurrence of the bat ears.

According to an aspect of the present disclosure, one edge of the spacer is formed in parallel to the bridge, allowing the shape of the bridge to be uniformly controlled throughout that section, thereby further reducing the occurrence of bat ears.

According to an aspect of the present disclosure, one edge of the spacer is configured to come into contact with the bridge, allowing a greater force to be applied to the bridge in the thickness direction of the spacer, thereby further reducing the occurrence of bat ears.

According to an aspect of the present disclosure, the spacer is formed by stacking the first layer and the second layer having different rigidities, allowing the structural stability of the pouch-type case to be enhanced or the airtightness of the accommodation space to be increased.

According to an aspect of the present disclosure, the spacer is configured to extend along the periphery of the accommodation space, allowing the structural stability of the pouch-type case to be enhanced or the airtightness of the accommodation space to be increased.

According to an aspect of the present disclosure, the spacer includes the first layer and the second and third layers provided on opposite sides of the first layer and bonded to the pouch, respectively, thereby allowing the structural stability of the spacer and the effect of reducing bat ears to be further enhanced.

The effects of the present disclosure are not limited to the aforementioned effects, and other effects not mentioned may be clearly understood by those ordinarily skilled in the art from the present specification and the accompanying drawings.

### BRIEF DESCRIPTION OF THE DRAWINGS

The following drawings attached hereto exemplify embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 is an exploded perspective view of a secondary battery according to a first embodiment of the present disclosure.
FIG. 2 is a cross-sectional view taken along line I-I in FIG. 1.
FIG. 3 is a perspective view of the secondary battery according to the first embodiment of the present disclosure.
FIG. 4 is a cross-sectional view taken along line II-II in FIG. 3.
FIG. 5 is an enlarged view of portion A in FIG. 3.
FIG. 6 is a cross-sectional view taken along line III-III in FIG. 3.
FIG. 7 is a plan view of portion A in FIG. 3 as viewed from above.
FIG. 8 is a perspective view of a secondary battery according to a comparative embodiment of the present disclosure.
FIG. 9 is a plan view of a corner portion of the secondary battery illustrated in FIG. 8 as viewed from above.
FIG. 10 is a vertical cross-sectional view of a secondary battery according to a second embodiment of the present disclosure.
FIG. 11 is a vertical cross-sectional view of a secondary battery according to a third embodiment of the present disclosure.
FIG. 12 is an exploded perspective view of a secondary battery according to a fourth embodiment of the present disclosure.
FIG. 13 is a perspective view of the secondary battery according to the fourth embodiment of the present disclosure.
FIG. 14 is a vertical cross-sectional view of the secondary battery according to the fifth embodiment of the present disclosure.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### DETAILED DESCRIPTION

Embodiments of the present disclosure are described in detail to enable those skilled in the art to easily carry out the disclosure. However, the present disclosure may be implemented in various different forms and is not limited or restricted by the following examples.

In order to clearly describe the present disclosure, detailed descriptions of portions unrelated to the present disclosure or known technologies that may unnecessarily obscure the gist of the present disclosure have been omitted. Additionally, when assigning reference numerals to components in each drawing in this specification, the same or similar reference numerals are assigned to the same or similar components throughout the specification.

In addition, the terms or words used in the specification and claims should not be construed as limited to their ordinary or dictionary meanings, but should be construed as meanings and concepts consistent with the technical idea of the present disclosure based on the principle that an inventor may appropriately define the concepts of terms in order to explain their invention in the best way.

Among the various types of secondary batteries, pouch-type secondary batteries are attracting significant attention due to their ability to be stacked with high density, their high energy density per weight, relatively low manufacturing cost, and ease of modification. The case of these pouch-type secondary batteries may have a structure in which a sheet, made from a single component, is folded.

Generally, pouch-type secondary batteries undergo a heat sealing process to seal the case, but when a sheet made from a single component is folded to form the case, the folded portion may protrude outward. This portion is sometimes referred to as a "bat ear" because it resembles the ear of a bat.

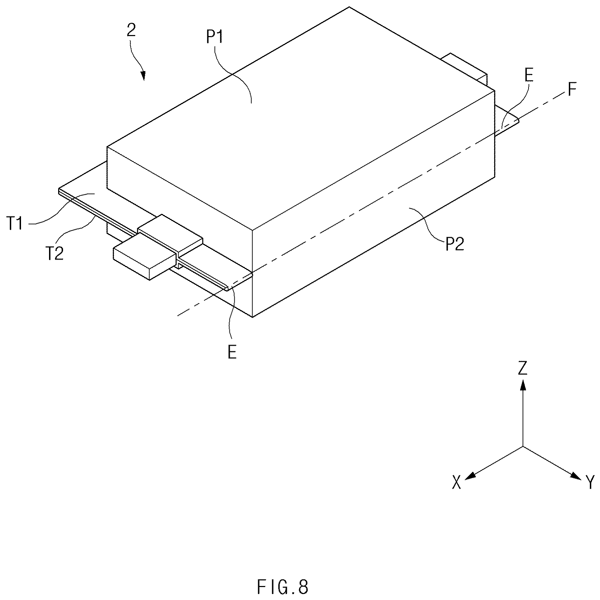

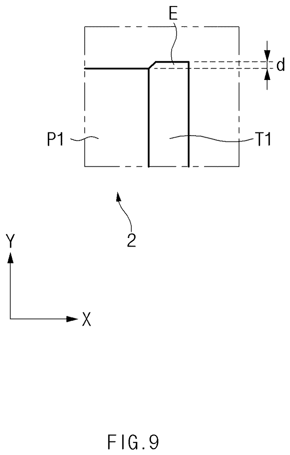

There may be various reasons for the formation of bat ears, one of which is that a partial deviation in the degree of folding may occur when the sheet is folded along the folding line. For example, as illustrated in FIGS. 8 and 9, the portions P1, P2 where electrodes are accommodated are not folded along the folding line F, while the other terrace portions T1, T2 are folded along the folding line F. As a result, a deviation in the degree of folding may occur, leading to the formation of bat ears E.

When such a bat ear E is formed, the length of the bat ear portion is also measured when measuring the length of the battery cell, which may result in a measured length that is longer than the actual length of the battery cell. This causes a wasted portion in the measured dimensions of the battery cell, reducing the energy density of the secondary battery.

The present disclosure relates to a secondary battery that includes a pouch-type case formed by folding a single sheet along a folding line. The pouch-type case may include a space where an electrode assembly may be accommodated.

In the secondary battery according to an embodiment of the present disclosure, a film- or sheet-shaped spacer is interposed between the folded portions of the pouch-type case. Due to the spacer, the folded portions of the pouch-type case may spread out or flatten under the force applied in the thickness direction of the spacer.

Accordingly, the spacer in the secondary battery according to the embodiment of the present disclosure may locally control the shape of the folded portions of the pouch-type case. Through this function of the spacer, the outer surfaces of the folded portions of the pouch-type case may have a uniform shape overall along the folding line.

This may eliminate deviations in the degree of folding along the folding line F in the pouch-type case, thereby minimizing the formation of bat ears. Accordingly, the secondary battery according to the embodiment of the present disclosure may have a higher energy density.

Hereinafter, a secondary battery, according to a first embodiment of the present disclosure, will be described.

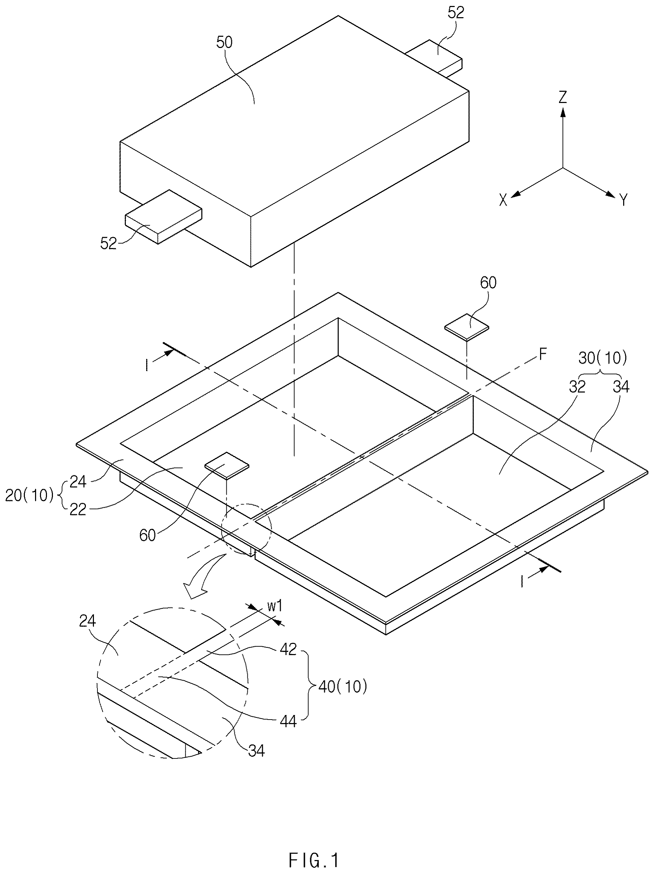

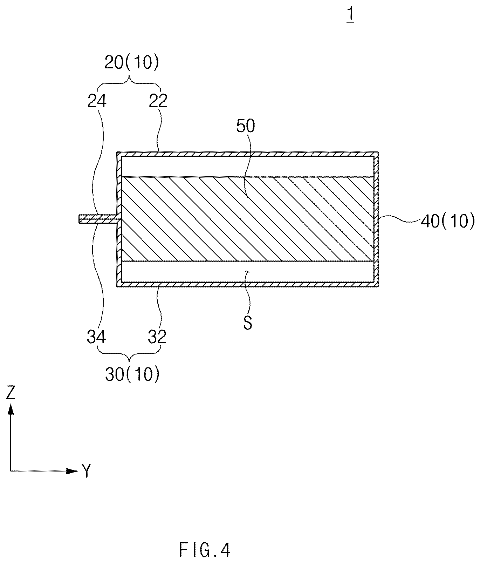

FIGS. 1 to 7 schematically illustrate components of each of the secondary battery, according to the first embodiment of the present disclosure, and a secondary battery of a comparative example. The sizes or shapes of the components may be somewhat exaggerated for the purpose of understanding the disclosure.

Referring to FIGS. 1 to 3, the secondary battery 1 according to the first embodiment of the present disclosure may include a pouch-type case 10.

Hereinafter, a process of manufacturing the pouch-type case 10 of the secondary battery according to the first embodiment of the present disclosure is briefly described.

The pouch-type case 10 of the secondary battery 1 according to the first embodiment of the present disclosure may include a first pouch 20, a second pouch 30, and a bridge 40 which is provided along a folding line F between the two pouches 20, 30. In addition, the bridge 40 may include an accommodation portion-side connecting portion 42 and a terrace portion-side connecting portion 44.

The pouch-type case 10 may be manufactured by folding, along the folding line F, a single sheet, in which the first accommodation portion 22 of the first pouch 20 and the second accommodation portion 32 of the second pouch 30 may be recessed side by side. The aforementioned accommodation portion-side connecting portion 42 is positioned between the first accommodation portion 22 and the second accommodation portion 32.

Before the single sheet is folded, the portions where the accommodation portion-side connecting portion 42 is connected to the first accommodation portion 22 and where the accommodation portion-side connecting portion 42 is connected to the second accommodation portion 32 may have a bent shape.

When the single sheet is folded along the folding line F to form the pouch-type case 10, the portions where the accommodation portion-side connecting portion 42 is connected to the first accommodation portion 22 and where the accommodation portion-side connecting portion 42 is connected to the second accommodation portion 32 may expand to be flat. The traces of the bending that existed before the sheet is folded along the folding line F may remain in the aforementioned portions.

The portions where the terrace portion-side connecting portion 44 is connected to a first terrace portion 24 and where the terrace portion-side connecting portion 44 is connected to a second terrace portion 34 may remain flat before the single sheet is folded. However, when the single sheet is folded along the folding line F to form the pouch-type case 10, the terrace portion-side connecting portion 44 is also folded along the folding line F.

During the process discussed above, when there is any deviation in the degree of folding between the accommodation portion-side connecting portion 42 and the terrace portion-side connecting portion 44 of the bridge 40, a bat ear may be formed in the folded portion of the pouch-type case 10.

Meanwhile, the secondary battery 1 according to the first embodiment of the present disclosure may include an electrode assembly 50 and an electrode lead 52. In the present embodiment, the electrode assembly 50 may be an assembly formed by alternately stacking multiple positive electrodes, multiple negative electrodes, and multiple separators.

The electrode assembly 50 may have a shape in which a negative electrode sheet, a positive electrode sheet, and a separator sheet are wound together. The shape (or structure) of the electrode assembly 50 is not particularly limited as long as it can charge and discharge electrical energy.

In the present embodiment, the electrode lead 52 may be connected to a side of the electrode assembly 50. The electrode lead 52 is configured to electrically connect the electrode assembly 50 to an external load or power source.

As illustrated, the electrode lead 52 is connected to the electrode assembly 50 and may be provided in the form of a sheet or film extending outside the accommodation space S. The electrode lead 52 may have various structures capable of electrically connecting the electrode assembly 50 to the exterior.

A pair of electrode leads 52 may be provided. The pair of electrode leads 52 may be respectively connected to the positive electrode and the negative electrode of the electrode assembly 50. In this case, the pair of electrode leads 52 may be disposed to face opposite sides of the electrode assembly 50. The pair of electrode leads 52 may also be spaced apart in parallel directions. As described above, the pouch-type case 10 may be formed by folding a single sheet along the folding line F. The folding line F may be a straight line parallel to the X-axis, as illustrated. According to an embodiment, the folding line F may be bent or curved in some portions, as necessary.

Referring to FIGS. 1 to 5, in the present embodiment, the pouch-type case 10 may include a first pouch 20, a second pouch 30, and a bridge 40. The first pouch 20 and the second pouch 30 are disposed to face each other in a folded state, forming an accommodation space S therebetween. The aforementioned electrode assembly 50 may be accommodated in the accommodation space S.

In the present embodiment, the first pouch 20 may include an accommodation portion (hereinafter referred to as a 'first accommodation portion') 22 and a terrace portion (hereinafter, referred to as a "first terrace portion') 24. The first accommodation portion 22 is concavely recessed and may have a cup shape having a predetermined space therein or a box shape having one open side. In this case, the predetermined space may have a rectangular parallelepiped shape, but it can be appropriately modified considering, for example, the shape of the electrode assembly 50, as described below.

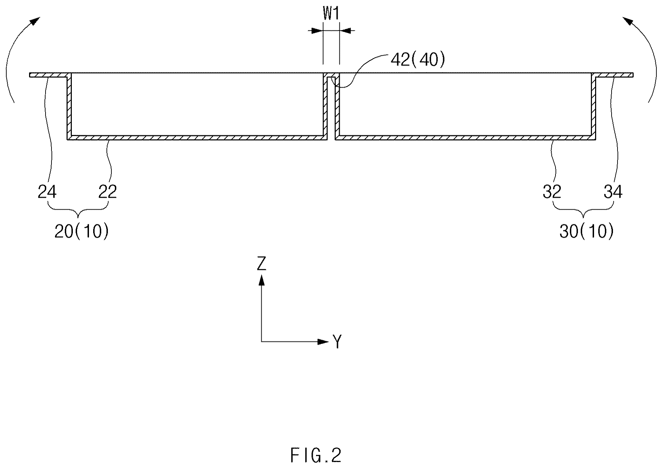

In the present embodiment, it is assumed that the first accommodation portion 22 is provided in the form of a box with one open side, as illustrated in FIGS. 1 and 2. Meanwhile, the first terrace portion 24 may be provided at the peripheral edge of the first accommodation portion 22. The first terrace portion 24 is in surface contact with the second terrace portion 34 of the second pouch 30 which will be described later, and is configured to seal the accommodation space S of the pouch-type case 10. The first terrace portion 24 may extend outward by a predetermined width from the first accommodation portion 22.

According to the present embodiment, the first terrace portion 24 may extend along the peripheral edge of the open side of the first accommodation portion 22. This first terrace portion 24 may be formed along all sides of the peripheral edge of the first accommodation portion 22 except for one side. Here, the one side where the first terrace portion 24 is not provided may be the side parallel (or overlapping) with the folding line F. Accordingly, the first terrace portion 24 may partially surround the perimeter of the accommodation space S.

Referring to FIGS. 1 to 5, the second pouch 30 according to the first embodiment of the present disclosure may also include an accommodation portion (hereinafter referred to as a 'second accommodation portion') 32 and a terrace portion (hereinafter referred to as a 'second terrace portion') 34. In the present embodiment, the second accommodation portion 32 is configured to form the accommodation space S together with the aforementioned first accommodation portion 22.

For this purpose, the second accommodation portion 32 may be concavely recessed in the direction opposite to the first accommodation portion 22 and may have a cup shape having a predetermined space therein or a box shape having one open side. In this case, the shape of the space may be appropriately modified considering the shape of the aforementioned electrode assembly 50.

In the present embodiment, the space formed inside the second accommodation portion 32 has a shape symmetrical to the aforementioned first accommodation portion 22. The internal spaces of the first accommodation portion 22 and the second accommodation portion 32 may have different shapes. In the present embodiment, it is assumed that the second accommodation portion 32 has a box shape with one open side.

In the present embodiment, a second terrace portion 34 is provided at the peripheral edge of the second accommodation portion 32. The second terrace portion 34 may come into surface contact with the aforementioned first terrace portion 24. Accordingly, the internal space S formed between the first accommodation portion 22 and the second accommodation portion 32 may be sealed by a sealing process such as fusion. The second terrace portion 34 may extend outward from the second accommodation portion 32 to have a predetermined width.

In the present embodiment, the second terrace portion 34 may extend along the peripheral edge of the open side of the second accommodation portion 32. In this case, the second terrace portion 34 may extend in parallel to the aforementioned first terrace portion 24. This is to ensure that the second terrace portion 34 comes into full surface contact with the first terrace portion 24.

Similarly to the first terrace portion 24, the second terrace portion 34 may be formed along all sides of the peripheral edge of the second accommodation portion 32 except for one side. In this case, the one side where the second terrace portion 34 is not provided may be the side parallel (or overlapping) with the folding line F. Accordingly, the second terrace portion 34 may partially surround and seal the perimeter of the accommodation space S together with the first terrace portion 24.

In this case, the first terrace portion 24 and the second terrace portion 34 may be bonded by a predetermined process. For example, the first terrace portion 24 and the second terrace portion 34 may be bonded by a thermal fusion process. In one aspect of the present disclosure, the type of process or the structure by which the first terrace portion 24 and the second terrace portion 34 are bonded is not particularly limited as long as the accommodation space S can be sealed.

Referring back to FIGS. 1 to 6, the bridge 40 of the secondary battery 1 according to the first embodiment of the present disclosure may be provided along the folding line F between the first pouch 20 and the second pouch 30.

In the present embodiment, the bridge 40 connects the first pouch 20 and the second pouch 30. Such a bridge 40 may be naturally formed during the manufacturing process of the pouch-type case 10. This will be described later with reference to FIGS. 1 and 2.

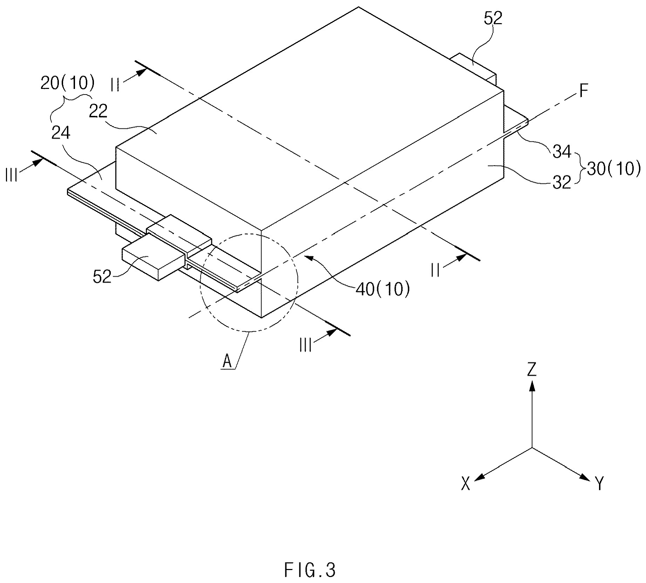

Referring to FIGS. 3 to 5, the bridge 40 according to the first embodiment of the present disclosure may include an accommodation portion-side connecting portion 42. In the present embodiment, the accommodation portion-side connecting portion 42 may be configured to connect the aforementioned first accommodation portion 22 and second accommodation portion 32.

In the present embodiment, the accommodation portion-side connecting portion 42 may connect one side (or one edge) of the open surface of the first accommodation portion 22 and one side (or one edge) of the open surface of the second accommodation portion 32. In this case, the one side of the first accommodation portion 22 and the one side of the second accommodation portion 32 connected by the accommodation portion-side connecting portion 42 may be the sides where the first and second terrace portions 24, 34 are not provided.

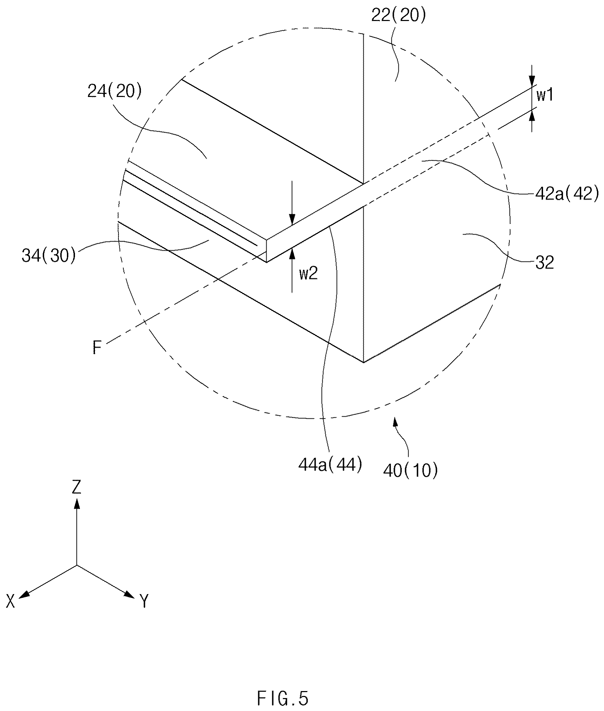

In the present embodiment, the accommodation portion-side connecting portion 42 may have a predetermined width w1 (hereinafter referred to as a 'first width') in the direction where the first accommodation portion 22 and the second accommodation portion 32 face each other (the Z-axis direction). The accommodation portion-side connecting portion 42 may include an outer surface 42a formed in the aforementioned direction. For example, FIG. 5 illustrates the outer surface 42a.

In the present embodiment, the accommodation portion-side connecting portion 42 may be naturally formed between the first accommodation 22 and the second accommodation 34, which are formed side by side in a single sheet, as illustrated in FIGS. 1 and 2.

Referring back to FIGS. 3 to 5, in the present embodiment, the portion where the accommodation portion-side connecting portion 42 is connected to the first accommodation portion 22 and the portion where the accommodation portion-side connecting portion 42 is connected to the second accommodation portion 32 may remain flat without being folded or bent.

Herein, the description that the portion where the accommodation portion-side connecting portion 42 is connected to the first and second accommodation portions 22, 32 is flat means that the connecting portions are formed flat when viewed as a whole, and does not exclude the possibility of localized curving or bending at the connecting portions.

The reason for localized bending or folding is that, for example, the secondary battery 1 may be affected by external force during the manufacturing process or transportation process, or traces of bending may remain in the portions where the accommodation portion-side connecting portion 42 is connected to the first accommodation portion 22 and the second accommodation portion 32.

Referring to FIGS. 3 to 7, the bridge 40 of the secondary battery 1 according to the first embodiment of the present disclosure may include a terrace portion-side connecting portion 44. In the present embodiment, the terrace portion-side connecting portion 44 may be configured to connect the aforementioned first terrace portion 24 and second terrace portion 34 to each other.

In this case, the terrace portion-side connecting portion 44 may be provided at both ends of the accommodation portion-side connecting portion 42 in the extending direction. The terrace portion-side connecting portion 44 may be provided along the folding line F.

The terrace portion-side connecting portion 44 may be naturally formed as the first pouch 20 and the second pouch 30 of the pouch-type case 10 are formed from a single sheet, as illustrated in FIGS. 1 and 2.

Referring to FIGS. 1 and 2, when the first accommodation portion 22 is formed on a single sheet, the first terrace portion 24 is formed at the peripheral edge of the first accommodation portion 22, and when the second accommodation portion 22 is formed, the second terrace portion 34 is formed at the peripheral edge of the second accommodation portion 32. In this case, a terrace portion-side connecting portion 44 connecting the first terrace portion 24 and the second terrace portion 34 may be naturally formed therebetween.

Referring back to FIGS. 3 to 5, the terrace portion-side connecting portion 44 of the secondary battery 1 according to the first embodiment of the present disclosure may have a predetermined width w2 (hereinafter referred to as a 'second width') in a direction parallel to the first width w1 of the accommodation portion-side connecting portion 42 (the Z-axis direction). In this case, the direction in which the first width w1 and the second width w2 are formed may be the thickness direction of a spacer 60, which will be described later.

The terrace portion-side connecting portion 44 may include an outer surface 44a formed in the aforementioned direction. The description that the outer surface 44a of the terrace portion-side connecting portion 44 is formed in the aforementioned direction may mean that, when viewed as a whole, the outer surface 44a of the terrace portion-side connecting portion 44 is formed in the aforementioned direction, and does not exclude the presence of localized curved portions on the outer surface 44a.

The second width w2 (or outer surface 44a) of the terrace portion-side connecting portion 44 may be formed by the spacer 60, which will be described together with the spacer 60 in the following description.

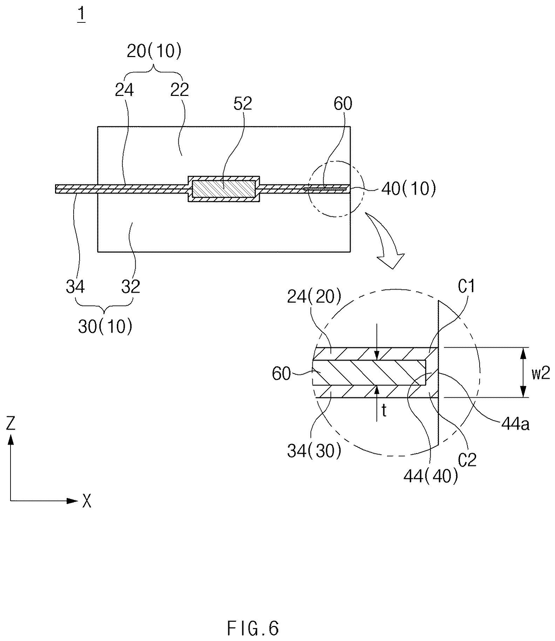

Referring to FIG. 6, which is a cross-sectional view taken along line **III-III** of FIG. 3, in the secondary battery 1 according to the first embodiment of the present disclosure, the portion C1 where the terrace portion-side connecting portion 44 is connected to the first terrace portion 24 and the portion C2 where the terrace portion-side connecting portion 44 is connected to the second terrace portion 34 may be bent.

This is because, as the spacer 60, which will be described later, is interposed between the first pouch 20 and the second pouch 30, the portion C1 where the terrace portion-side connecting portion 44 is connected to the first terrace portion 24 and the portion C2 where the terrace portion-side connecting portion 44 is connected to the second terrace portion 34 are configured to be pressed by the corners of the spacer 60.

The portion C1 where the terrace portion-side connecting portion 44 is connected to the first terrace portion 24 and the portion C2 where the terrace portion-side connecting portion 44 is connected to the second terrace portion 34 are configured to wrap around the corners of the spacer 60.

As a result, the outer surface 44a having the second width w2 may be formed in the thickness direction of the spacer 60 on the terrace portion-side connecting portion 44, while the first terrace portion 24 and the second terrace portion 34 may be disposed to face each other.

Referring to FIGS. 1 to 6, the secondary battery 1 according to the first embodiment of the present disclosure includes a spacer 60 interposed between the first pouch 20 and the second pouch 30. The spacer 60 of the secondary battery 1 according to the first embodiment of the present disclosure may have a film or sheet shape with a predetermined thickness (t).

In the present embodiment, the spacer 60 is a film or sheet that controls the shape of the terrace portion-side connecting portion 44 by allowing the terrace portion-side connecting portion 44 to spread out or flatten in the thickness direction of the spacer 60 (*e.g.,* the Z-axis direction) even after sealing. Through this, the deviation in the degree of folding between the terrace portion-side connecting portion 44 and the accommodation portion-side connecting portion 42 may be reduced.

In the present embodiment, the spacer 60 may be spaced apart from the electrode assembly 50 in the direction of the folding line F. This is to allow the spacer 60 to be interposed between the first terrace portion 24 and the second terrace portion 34, where the accommodation space S is sealed.

Referring to FIGS. 1, 5, and 6, the spacer 60 of the secondary battery 1 according to the first embodiment of the present disclosure may be rectangular. However, the shape of the spacer 60 may be appropriately modified depending on the shape of the first terrace portion 24 and the second terrace portion 34, as well as the bending of the folding line F.

In this case, the spacer 60 may have a predetermined thickness (t). When the spacer 60 with the predetermined thickness (t) is interposed between the first terrace portion 24 and the second terrace portion 34, the terrace portion-side connecting portion 44 may be subjected to a certain force in the thickness direction of the spacer 60 *(e.g.,* the Z-axis direction). In order for the spacer 60 to maintain the predetermined thickness (t), even after the sealing of the first terrace portion 24 and the second terrace portion 34, the spacer 60 includes a material with physical properties that allow it to retain its thickness after sealing. For example, assuming that the material of the sealant layer, which is the innermost layer of the pouch film, is polypropylene (PP), the spacer 60 according to an embodiment of the present disclosure may include, in addition to PP that enables partial fusion with the sealant layer, which is the innermost layer of the pouch film, during the sealing process, a material with physical properties different from PP, such as polyethylene terephthalate (PET) or polystyrene sulfonate (PSS), so that the spacer 60 can maintain the predetermined thickness (t) after sealing. Here, based on the width of the accommodation portion-side connecting portion 42 *(e.g.,* the first width W1), the predetermined thickness (t) of the spacer 60 may be, for example, around W1 x 1 or W1 x 1.5.

Accordingly, the terrace portion-side connecting portion 44 spreads out or flattens in the thickness direction of the spacer 60, and as illustrated in FIG. 6, one portion of the terrace portion-side connecting portion 44 adjacent to the first terrace portion 24 and the other portion adjacent to the second terrace portion 34 may not be in contact with each other.

As the pouch-type case 10 is pressed by the corner portions in the thickness direction of the spacer 60, the portion C1 where the terrace portion-side connecting portion 44 is connected to the first terrace portion 24 and the portion C2 where the terrace portion-side connecting portion 44 is connected to the second terrace portion 34 may be bent.

As a result, the terrace portion-side connecting portion 44 may have a second width w2 in the thickness direction of the spacer 60. The outer surface 44a having the second width w2 in the thickness direction of the spacer 60 may be formed on the terrace portion-side connecting portion 44.

In the present disclosure, the description that the outer surface 44a is formed in the thickness direction of the spacer 60 may mean that, when viewed as a whole, the outer surface 44a is formed in the thickness direction, and does not exclude the existence of localized curved or indented portions on the outer surface 44a.

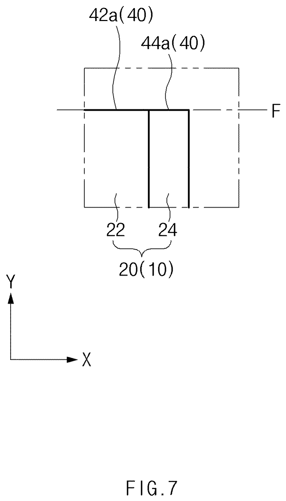

Due to the function of the spacer 60, the outer surface 44a of the terrace portion-side connecting portion 44 and the outer surface 42a of the accommodation portion-side connecting portion 42 may extend in parallel to each other even after the sealing of the first terrace portion 24 and the second terrace portion 34. While the outer surface 44a of the terrace portion-side connecting portion 44 and the outer surface 42a of the accommodation portion-side connecting portion 42 are connected to each other, the outer surfaces may be at least partially positioned in parallel to each other along the folding line F, as illustrated in FIG. 7.

As a result, the deviation in the degree of folding between the accommodation portion-side connecting portion 42 and the terrace portion-side connecting portion 44 may be reduced. Therefore, the secondary battery 1 according to the first embodiment of the present disclosure may minimize the occurrence of bat ears, thereby having a higher energy density.

In this case, referring back to FIGS. 1, 5, and 6, the thickness (t) of the spacer 60 may be greater than or equal to the first width w1 of the accommodation portion-side connecting portion 42. This is to allow the spacer 60 to apply a sufficient amount of force into its thickness direction to the terrace portion-side connecting portion 44, so as to spread or flatten the terrace portion-side connecting portion 44 more widely in the thickness direction.

**In** this way, when the terrace portion-side connecting portion 44 spreads out or flattens to a wider width in the thickness direction of the spacer 60, the terrace portion-side connecting portion 44 is pulled toward the first and second terrace portions 24, 34, thereby more effectively reducing the possibility of occurrence of the bat ears.

Alternatively, the second width w2 of the terrace portion-side connecting portion 44 may be greater than or equal to the first width w1 of the accommodation portion-side connecting portion 42. This is to further reduce the deviation between the terrace portion-side connecting portion 44 and the accommodation portion-side connecting portion 42, considering that the portion where the accommodation portion-side connecting portion 42 and the first accommodation portion 22 are connected and the portion where the accommodation portion-side connecting portion 42 and the second accommodation portion 32 are connected flatten to be relatively flat or spread out, whereas the portion C1 where the terrace portion-side connecting portion 44 and the first terrace portion 24 are connected and the portion C2 where the terrace portion-side connecting portion 44 and the second terrace portion 34 are connected are relatively bent.

Referring back to FIGS. 3 to 7, in the present embodiment, one edge of the spacer 60 may extend parallel to the terrace portion-side connecting portion 44 of the bridge 40. Accordingly, the deviation between the accommodation portion-side connecting portion 42 and the terrace portion-side connecting portion 44 may be minimized overall.

As illustrated in FIG. 6, the spacer 60 may have one edge in contact with the terrace portion-side connecting portion 44. When the terrace portion-side connecting portion 44 is directly in contact with the spacer 60 in this way, the action of the spacer 60 spreading or flattening the terrace portion-side connecting portion 44 in the thickness direction may be performed more effectively.

Referring back to FIG. 1, the secondary battery 1 according to the first embodiment of the present disclosure may include two spacers 60, namely, a first spacer 60 and a second spacer 60. In addition, the first spacer 60 and the second spacer 60 may be spaced apart from each other and disposed on both sides of the electrode assembly 50 in the direction of the folding line F.

The first and second spacers 60, which are spaced apart from each other and disposed on both sides of the electrode assembly 50 in the direction of the folding line F, may respectively control the shapes of the terrace portion-side connecting portions 44 respectively provided on both sides of the accommodation portion-side connecting portion 42. Through this, the occurrence of the bat ears may be minimized across the entire area of the bridge 40.

Hereinafter, the secondary battery according to the first embodiment of the present disclosure will be compared with the secondary battery according to a comparative example, and the effects of the spacer in the secondary battery according to the first embodiment of the present disclosure will be explained.

Referring to FIGS. 8 and 9, in the secondary battery 2 according to the comparative example, the portion where the first accommodation portion P1 and the second accommodation portion P2 are connected is spread to be flat along the folding line F, whereas the portion where the first terrace portion T1 and the second terrace portion T2 are connected is folded along the folding line F so that one surface and the other surface are in contact with each other.

Accordingly, the portion where the first and second terrace portions T1, T2 are connected may be pushed outward (in the positive Y-axis direction). As a result, the bat ears E may be formed in this portion. The bat ears E may protrude outward by a predetermined distance (d) from the side portions of the first and second accommodation portions P1, P2. This may reduce the space utilization of the secondary battery 1, thereby lowering the energy density.

In contrast, referring to FIGS. 3, 5, and 7, in the secondary battery 1 according to the first embodiment of the present disclosure, the spacer 60 is interposed between the first terrace portion 24 and the second terrace portion 34, allowing the terrace portion-side connecting portion 44, which connects the first terrace portion 24 and the second terrace portion 34, to spread out or flatten in the thickness direction (the Z-axis direction) even after sealing the first terrace portion 24 and the second terrace portion 34.

Accordingly, the terrace portion-side connecting portion 44 may have an outer surface 44a that spreads out or flattens to the same degree as the outer surface 42a of the accommodation portion-side connecting portion 42. This may reduce the partial deviation in the degree of folding in the bridge 40. Furthermore, this action may pull the terrace portion-side connecting portion 44 toward the first and second terrace portions 24, 34 (in the negative Y-axis direction), suppressing or preventing the terrace portion-side connecting portion from protruding outward (in the positive Y-axis direction).

Accordingly, the secondary battery 1 according to the present embodiment has a lower possibility of occurrence of bat ears compared to the secondary battery 2 according to the comparative example, and thus may have a higher energy density.

Hereinafter, the secondary battery according to another embodiment of the present disclosure will be described with reference to different drawings.

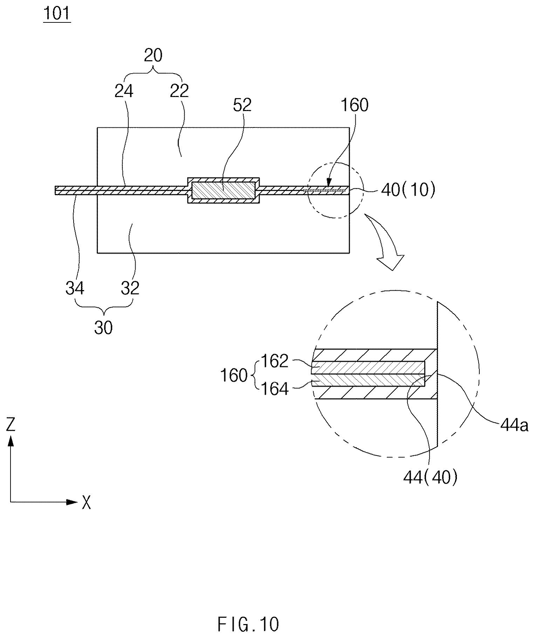

FIG. 10 discloses a secondary battery 101 according to a second embodiment of the present disclosure. Referring to FIG. 10, the spacer 160 of the secondary battery 101 according to the second embodiment of the present disclosure may include a first layer 162 and a second layer 164, which are stacked on each other. In this case, the first layer 162 and the second layer 164 may be provided in the form of a film or sheet having a predetermined thickness.

In this case, the first layer 162 and the second layer 164 may have different properties. For example, the first layer 162 may be made of polypropylene, which has a certain degree of insulation. Meanwhile, the second layer 164 may be made of a material that has greater rigidity than the first layer 162. By doing so, the spacer 60 may maintain a predetermined thickness (t) even after the sealing of the first terrace portion 24 of the first pouch 20 and the second terrace portion 34 of the second pouch 30.

In addition, the spacer 160 according to the present embodiment may perform multiple functions, such as controlling the shape of the bridge 40, increasing the degree of insulation between the pouches, or reinforcing the rigidity, to enhance structural stability.

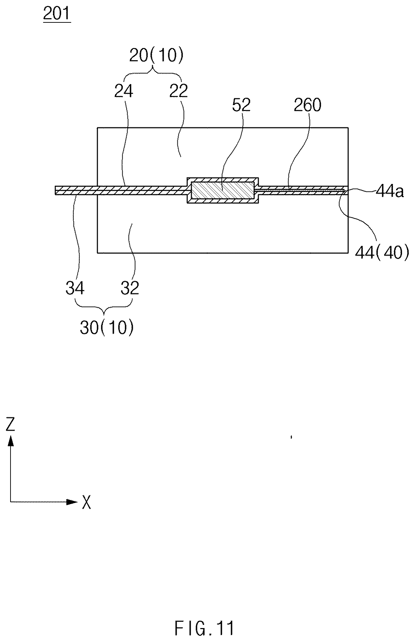

FIG. 11 discloses a secondary battery 201 according to a third embodiment of the present disclosure. Referring to FIG. 11, the spacer 260 of the secondary battery 201 according to the third embodiment of the present disclosure may extend in the Y-axis direction along the perimeter of the accommodation space.

For example, the spacer 260 may extend from the terrace portion-side connecting portion 44 of the bridge 40 to a side portion of the electrode lead 52. Accordingly, the pouch-type case 10 may have a uniform thickness along the perimeter of the accommodation space, thereby enhancing the structural stability and airtightness of the accommodation space in the secondary battery 201.

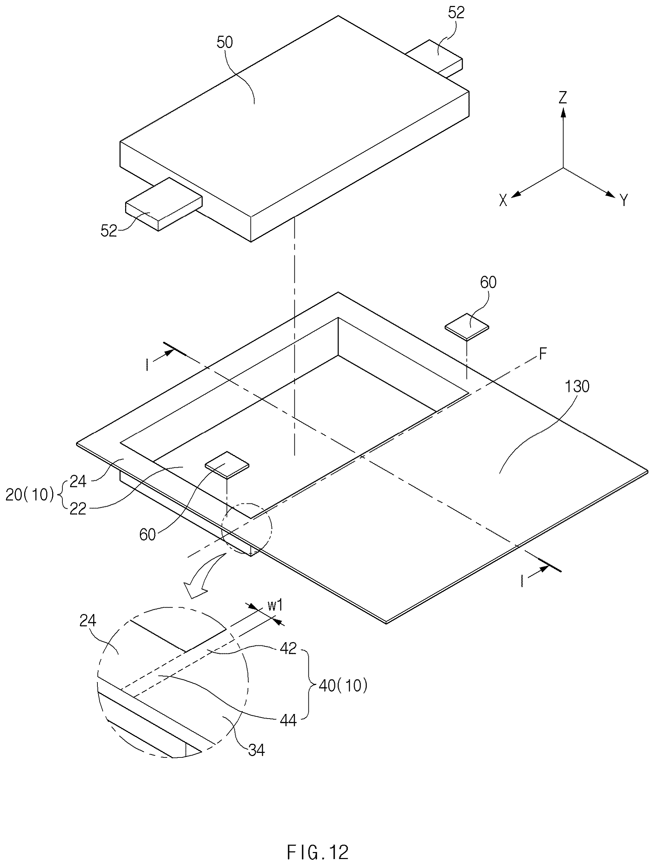

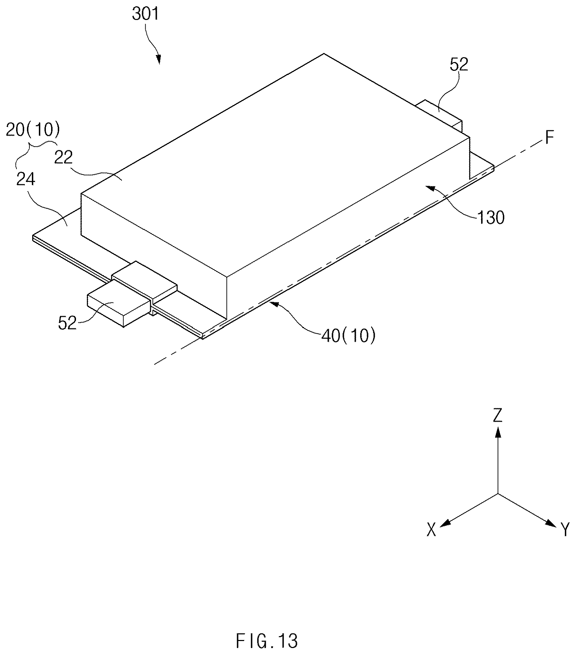

FIGS. 12 and 13 disclose a secondary battery 301 according to a fourth embodiment of the present disclosure. Referring to FIGS. 12 and 13, the second pouch 130 of the secondary battery 301 according to the fourth embodiment of the present disclosure may be provided in the form of a flat sheet.

In the present embodiment, when the pouch-type case 10 is folded along the folding line F, the central portion of the second pouch 130 may entirely cover the first accommodation portion 22 of the first pouch 20. Accordingly, an accommodation space S may be formed between the first accommodation portion 22 and the second pouch 130.

In addition, the edge area of the second pouch 130 may be in full contact with the first terrace portion 24 of the first pouch 20. In this case, the edge area of the second pouch 130 and the first terrace portion 24 may be bonded through, for example, a thermal fusion process, as described above. Accordingly, the accommodation space S may be sealed.

In the present embodiment, the accommodation portion-side connecting portion 42 of the bridge 40 may connect one side of the first accommodation portion 22 and the central portion of one side of the second pouch 130. In addition, the terrace portion-side connecting portion 44 may connect the first terrace portion 24 and the extension direction side portion of one side of the second pouch 130.

In this case, the spacer 60 may be interposed between the first terrace portion 24 and the edge area of the second pouch 130. As a result, the shape of the portion where the edge area of the second pouch 130 is folded along the folding line F may be controlled. Therefore, the deviation in the degree of folding between the terrace portion-side connecting portion 44 and the accommodation portion-side connecting portion 42 may be reduced, and the occurrence of bat ears may be minimized.

Hereinafter, a secondary battery according to a fifth embodiment of the present disclosure will be described.

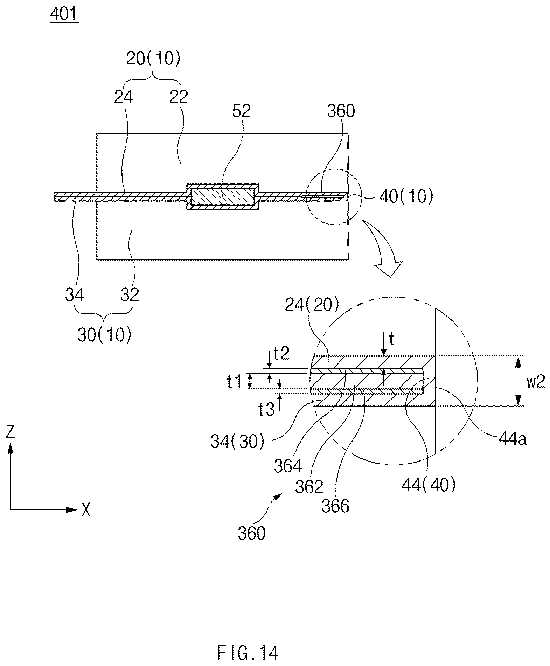

FIG. 14 is a vertical cross-sectional view of the secondary battery according to the fifth embodiment of the present disclosure. Hereinafter, the secondary battery according to the fifth embodiment of the present disclosure will be described, focusing on the differences from the secondary batteries according to the aforementioned first to fourth embodiments

Referring to FIG. 14, the spacer 360 according to the fifth embodiment of the present disclosure may include a first layer 362, a second layer 364, and a third layer 366. In this case, the second layer 364 and the third layer 366 may be provided on both sides of the first layer 362, respectively.

In the present embodiment, the first layer 362 may have different physical properties from the second and third layers 364, 366. For example, the first layer 362 may have greater rigidity than the second and third layers 364, 366. The first layer 362 may have a lower thermal deformation rate than the second and third layers 364, 366. This may enhance the structural stability and bat ear reduction effect of the spacer 360.

For example, the material of the first layer 362 may include, for example, polyethylene terephthalate (PET) and polystyrene sulfonate (PSS), and the material of the second and third layers 364, 366 may include, for example, polypropylene (PP), but the materials of the first to third layers 362 to 366 are not limited thereto.

In the present embodiment, the second and third layers 364, 366 may each be bonded to the pouch-type case 10 with which they are in contact. As illustrated, the second layer 364 may be bonded to the first pouch 20, and the third layer 366 may be bonded to the second pouch 30.

The second and third layers 364, 366 and the pouch-type case 10 may be bonded by heat or pressure. For this purpose, the second and third layers 364, 366 may include a resin material that becomes adhesive when melted by heat or pressure. As mentioned above, the second and third layers 364, 366 may include polypropylene, but are not limited thereto.

In this case, in order to improve the bonding property, the first pouch 20 may be provided with a first adhesive layer that becomes adhesive when melted by heat or pressure. The second pouch 30 may be provided with a second adhesive layer that becomes adhesive when melted by heat or pressure.

In the present embodiment, the first and second adhesive layers may be in contact with the first and second layers 364, 366, respectively. Here, the first and second adhesive layers may each include polypropylene, but the materials of the first and second adhesive layers are not limited to those described above.

In the present embodiment, the thickness of the first layer 362 (hereinafter referred to as a 'first thickness t1') may be at least 80% of a reference value. Here, the reference value may be the value obtained by subtracting twice the thickness (t) of the pouch-type case 10 from the second width w2 (w2 - 2 * t). This is to suppress or prevent the occurrence of the bat ears by the spacer 360.

In the present embodiment, the first thickness t1 may be no more than 120% of the reference value. This may be to suppress or prevent an excessive difference in thickness between the accommodation portion 22 and the terrace portion 24 due to the spacer 360, thereby minimizing the occurrence of wrinkles or cracks.

In the present embodiment, the thickness of the second layer 364 (hereinafter referred to as a 'second thickness t2') may be equal to or greater than the thickness of the first adhesive layer. This may be to ensure the bonding between the first pouch 20 and the spacer 360. Alternatively, this may be to maintain the internal pressure characteristics of the pouch-type case 10. Alternatively, this may be to suppress or prevent leakage of, for example, the electrolyte to the exterior from the pouch-type case 10.

In the present embodiment, the second thickness t2 may be 120% or less of the thickness of the first adhesive layer. This may be to minimize the formation of wrinkles at the boundary of the area where the bat ears may occur.

In the present embodiment, the thickness of the third layer 366 (hereinafter referred to as a 'third thickness t3') may be equal to or greater than the thickness of the second adhesive layer. This may be to ensure the bonding between the second pouch 30 and the spacer 360. Alternatively, this may be to maintain the internal pressure characteristics of the pouch-type case 10. Alternatively, this may be to suppress or prevent the leakage of, for example, the electrolyte to the exterior from the pouch-type case 10.

In the present embodiment, the third thickness t3 may be 120% or less of the thickness of the second adhesive layer. This may be to minimize the formation of wrinkles at the boundary of the area where the bat ears may occur.

In the present embodiment, the spacer 360 has been described as including three layers. However, depending on the need, the spacer 360 may include four or more layers. For example, a fourth layer containing at least one other material may be interposed between the first layer 362 and the second layer 366.

In the present embodiment, the pouch-type case 10 and the spacer 360 have been described as being fused together by heat or pressure through the second and third layers 364, 366. However, the bonding between the spacer 360 and the pouch-type case 10 is not limited to the aforementioned method. For example, it may also be possible for a separate adhesive layer to be interposed between the second layer 364 and the first pouch 20.

Hereinafter, a battery pack according to an embodiment of the present disclosure will be described.

The battery pack according to an embodiment of the present disclosure may include multiple secondary batteries. In this case, the secondary batteries may be any one of the secondary batteries according to the first to fifth embodiments described above.

The battery pack according to an embodiment of the present disclosure may include a packaging that accommodates multiple secondary batteries therein. The packaging may have various forms and shapes. For example, the packaging may have an enclosure shape to accommodate multiple secondary batteries, but it is not limited thereto.

The packaging may be provided with additional components to electrically connect the internal secondary batteries to the exterior or to allow communication between the interior and exterior. For example, the packaging may be provided with a bus bar to electrically connect the secondary batteries to the exterior, but it is not limited thereto.

In the above description, although the present disclosure has been described by limited embodiments and drawings, the above description is merely an example of the technical idea of the present disclosure, and those skilled in the art will appreciate that various modifications and variations may be made without departing from the essential characteristics of the present disclosure.

### [LIST OF REFERENCE NUMERALS]

1 101 201 301 401: Secondary battery
10 110: Pouch-type case
20: First pouch
30 130: Second pouch
40: Bridge
50: Electrode assembly
60 160 260 360: Spacer

## Claims

1. A secondary battery comprising:
a pouch-type case including a first pouch and a second pouch connected to each other, the pouch-type case being folded along a folding line such that an accommodation space surrounded by the first pouch and the second pouch is formed;
an electrode assembly accommodated in the accommodation space; and
a film- or sheet-shaped spacer that is spaced apart from the electrode assembly in a direction of the folding line and interposed between the first pouch and the second pouch.

2. The secondary battery according to claim 1, wherein the pouch-type case includes a bridge provided along the folding line to connect the first pouch and the second pouch.

3. The secondary battery according to claim 2, wherein one edge of the spacer extends in parallel to the bridge.

4. The secondary battery according to claim 2, wherein one edge of the spacer is in contact with the bridge.

5. The secondary battery according to claim 2, wherein the bridge extends in the direction of the folding line and has a predetermined width in a thickness direction of the spacer.

6. The secondary battery according to claim 2, wherein the first pouch and the second pouch each include:
an accommodation portion having a recessed shape; and
a terrace portion provided at a peripheral edge of the accommodation portion,
wherein the spacer is interposed between the terrace portion of the first pouch and the terrace portion of the second pouch.

7. The secondary battery according to claim 2, wherein the first pouch includes an accommodation portion having a recessed shape and a terrace portion provided at a peripheral edge of the accommodation portion,
wherein the second pouch is formed flat, and
wherein the spacer is interposed between the terrace portion of the first pouch and the terrace portion of the second pouch.

8. The secondary battery according to claim 6, wherein the bridge includes:
an accommodation portion-side connecting portion extending in the direction of the folding line to connect the accommodation portion of the first pouch and the accommodation portion of the second pouch; and
a terrace portion-side connecting portion extending from the accommodation portion-side connecting portion to connect the terrace portion of the first pouch and the terrace portion of the second pouch.

9. The secondary battery according to claim 8, wherein the accommodation portion-side connecting portion has a predetermined width in a thickness direction of the spacer, and
wherein the thickness of the spacer is greater than or equal to the width of the accommodation portion-side connecting portion.

10. The secondary battery according to claim 8, wherein the terrace portion-side connecting portion has a width greater than or equal to a width of the accommodation portion-side connecting portion.

11. The secondary battery according to claim 8, wherein the terrace portion-side connecting portion includes an outer surface parallel to the thickness direction of the spacer.

12. The secondary battery according to claim 8, wherein the terrace portion-side connecting portion and the accommodation portion-side connecting portion are connected to each other and extend to be at least partially positioned on a same line.

13. The secondary battery according to claim 8, wherein a portion where the terrace portion-side connecting portion and the terrace portion of the first pouch are connected, and a portion where the terrace portion-side connecting portion and the terrace portion of the second pouch are connected, are bent such that the terrace portion of the first pouch and the terrace portion of the second pouch face each other.

14. The secondary battery according to claim 8, wherein the terrace portion-side connecting portion spreads out or flattens in a thickness direction of the spacer such that one portion adjacent to the terrace portion of the first pouch and another portion adjacent to the terrace portion of the second pouch are not in contact with each other.

15. The secondary battery according to claim 1, wherein the spacer includes a first layer and a second layer stacked on each other, and
wherein the first layer and the second layer have different rigidities.

16. The secondary battery according to claim 1, wherein the spacer includes a first spacer and a second spacer which are respectively spaced apart on opposite sides of the electrode assembly in the direction of the folding line.

17. The secondary battery according to claim 1, wherein the spacer extends along a periphery of the accommodation space.

18. The secondary battery of claim 1, wherein the spacer includes:
a first layer; and
a second layer and a third layer respectively provided on opposite surfaces of the first layer.

19. The secondary battery according to claim 1, wherein the second and third layers include a resin material that becomes adhesive when heated, allowing the second and third layers to be bonded to the first and second pouches, respectively, by heat or pressure.

20. A battery pack comprising:
the secondary battery according to claim 1; and
a packaging configured to accommodate the secondary battery.
